Europäisches Patentamt

European Patent Office

Office européen des brevets

(19)

(11) Numéro de publication: **0 241 983 B1**

# FASCICULE DE BREVET EUROPEEN

(45) Date de publication de fascicule du brevet:
17.04.91

(51) Int. Cl.⁵: **H04N 7/137, G06F 15/70**

(21) Numéro de dépôt: 87200635.8

(22) Date de dépôt: 06.04.87

(54) **Dispositif de traitement d'images pour l'estimation du déplacement d'objets situés dans celles-ci.**

(30) Priorité: 15.04.86 FR 8605348

(43) Date de publication de la demande:
21.10.87 Bulletin 87/43

(45) Mention de la délivrance du brevet:
17.04.91 Bulletin 91/16

(84) Etats contractants désignés:
DE FR GB

(56) Documents cités:
DE-A- 3 328 341

COMPUTER VISION, GRAPHICS, AND IMAGE PROCESSING, vol. 21, no. 2, février 1983, pages 169-204, Academic Press, Inc., New York, US; J. STULLER et al.: "Kalman filter formulation of low-level television image motion estimation"

IEEE TRANSACTIONS ON COMMUNICATIONS, vol. COM-30, no. 1, janvier 1982, pages 201-211, IEEE, New York, US; Yuichi Ninomiya et al.: "A motion-compensated interframe coding scheme for television pictures"

(73) Titulaire: **LABORATOIRES D'ELECTRONIQUE PHILIPS**
**3, Avenue Descartes**
**F-94450 Limeil-Brévannes(FR)FR**

Titulaire: **N.V. Philips' Gloeilampenfabrieken**
**Groenewoudseweg 1**
**NL-5621 BA Eindhoven(NL)DE GB**

(72) Inventeur: **Mijiyawa, Mekano Société Civile S.P.I.D.**
**209, rue de l'Université**
**F-75007 Paris(FR)**

(74) Mandataire: **Chaffraix, Jean et al**
**Société Civile S.P.I.D. 156, Boulevard Haussmann**
**F-75008 Paris(FR)**

EP 0 241 983 B1

## Description

La présente invention concerne un dispositif de traitement d'images pour l'estimation $D(Z_i)$ du deplacement d'objets situés dans celles-ci, dispositif constitué à partir d'un organe d'estimation par filtrage de Kalman qui fournit pour chaque point "i" de coordonnées $Z_i$ d'image un vecteur de déplacement $DK(Z_i)$ à partir des informations contenues dans deux images successives $I(Z_i, t)$ et $I(Z_i, t\text{-}TR)$ séparées d'un temps TR.

Les fonctions $I(Z_i,t)$ et $I(Z_i,t\text{-}TR)$ représentent la luminance de l'image au point "i", $Z_i$ les coordonnées verticales $Y_i$ et horizontales $X_i$ de ce point "i".

Ce genre de dispositif trouve des applications importantes notamment dans le domaine de la télévision numérique où l'on s'efforce de transmettre avec des débits numériques aussi faibles que possible des séquences d'images de qualité satisfaisante. Par exemple pour obtenir un débit deux fois moindre on a préconisé de ne transmettre qu'une image sur deux d'une séquence, ce qui impose, pour restituer la séquence à la réception, de reconstituer les images manquantes par interpolation. On utilise alors les valeurs du déplacement D(i) caractérisant le mouvement d'image à image pour élaborer cette image d'interpolation IP à l'instant t-TR/2 selon la formule :

$$IP [Zi, t\text{-}(TR/2)] = 1/2\{I[Z_i - D(i)/2, t\text{-}(TR)] + I[Z_i + D(i)/2, t]\}$$

L'invention peut aussi trouver des applications pour la poursuite de cibles, d'analyse de cellules en biologie etc...

Le document DE-A-3328341 décrit un dispositif de codage d'images vidéo comportant deux organes d'estimation de mouvement cascadés, dont chacun fournit un vecteur représentatif du déplacement d'objets contenus dans l'image, pour chaque zone d'image variable.

L'article intitulé "Kalman Filter Formulation of Low Level Television Image Motion Estimation" écrit par John STULLER et Goplan KRISHNAMURTHY et paru dans les pages 169 à 204 de la revue COMPUTER VISION GRAPHICS AND IMAGE PROCESSING n° 21 de 1985 décrit l'utilisation du concept de filtrage de KALMAN pour estimer le mouvement d'objets dans une image de télévision.

On sait que ce genre de concept est efficace dans cette technique, cependant l'expérience montre qu'il subsiste des risques de mauvaise estimation et voire même de divergence du filtre.

L'invention propose un dispositif du genre mentionné dans le préambule de la revendication 1 qui procure une estimation du déplacement plus sûre et supprime pratiquement les risques de divergence dans l'opération de filtrage.

Pour cela un tel dispositif est remarquable en ce qu'il est prévu un deuxième organe d'estimation pour fournir pour chaque point "i" d'image un vecteur de déplacement $DB(Z_i)$ à partir des informations de luminance contenues dans deux images successives, un organe de mesure de qualité pour apprécier les vecteurs $DK(Z_i)$ et $DB(Z_i)$ et pour agir sur un sélecteur de vecteurs $DK(Z_i)$ ou $DB(Z_i)$ afin que le vecteur $D\text{-}(Z_i)$ fourni par le dispositif soit celui des deux vecteurs $DB(Z_i)$ et $DK(Z_i)$ donnant la meilleure qualité d'estimation et en ce qu'il est prévu un accès sur le premier organe d'estimation, qui est de préférence un organe de filtrage de KALMAN, pour recevoir ce vecteur $D(Z_i)$ sélectionné.

Ainsi grâce à l'invention, tout début de divergence des opérations de filtrage de KALMAN est neutralisé et l'accès pour recevoir $D(Z_i)$ permet de les reinitialiser sur de bonnes bases. Il va sans dire que le deuxième organe d'estimation de par ses qualités propres peut être supérieur à l'organe de filtrage de KALMAN. Lorsque le deuxième organe est du type décrit dans l'article intitulé "A Motion-Compensated Interframe Coding Scheme for Television Pictures" écrit par YUICHI NINOMIYA et YOSHIMICHI OHTSUKA et paru dans les pages 201 à 211 de la revue I.E.E.E. TRANSACTIONS ON COMMUNICATIONS, volume COM-30, n° 1, janvier, 1982, l'expérience montre que pendant 10 % du temps, c'est ce dernier organe qui procure la meilleure estimation tandis que pendant le reste de ce temps l'organe de filtrage de KALMAN est d'autant supérieur qu'il a été reinitialisé par les informations du deuxième organe d'estimation de déplacement.

Un autre mode de réalisation selon lequel il est prévu des moyens pour augmenter le nombre d'itérations de l'estimation de KALMAN, apporte l'avantage que l'estimation du déplacement est encore améliorée.

La description suivante accompagnée des dessins annexés, le tout donné à titre d'exemple non limitatif, fera bien comprendre comment l'invention peut être réalisée.

La figure 1 représente schématiquement un dispositif de traitement d'images conforme à l'invention.

La figure 2 montre l'organisation s'une image, en blocs et en éléments d'image.

La figure 3 est un diagramme temps montrant les cycles principaux de fonctionnement du dispositif de l'invention.

La figure 4 montre l'organisation d'un bloc d'images.

2

La figure 5 montre un schéma de réalisation d'un deuxième organe de filtrage opérant par corrélation de blocs.

La figure 6 est un diagramme temps montrant le fonctionnement du deuxième organe de filtrage montré à la figure 5.

La figure 7 montre un schéma de réalisation du premier organe d'estimation de KALMAN combiné avec l'organe de mesure de qualité et le sélecteur de vecteurs.

La figure 8 montre la structure d'un détecteur de mouvement.

La figure 9 est un diagramme temps pour l'explication du fonctionnement des organes montrés à la figure 7.

La figure 10 est un schéma d'un premier réseau de calcul faisant partie de l'organe d'estimation de KALMAN de la figure 7.

La figure 11 est un schéma d'un organe de mesure de qualité.

La figure 12 est un schéma d'un deuxième réseau de calcul faisant partie de l'organe d'estimation de KALMAN de la figure 7.

La figure 13 montre un mode de réalisation d'un filtre passe-bas numérique utilisé dans l'organe d'estimation de KALMAN montré à la figure 7.

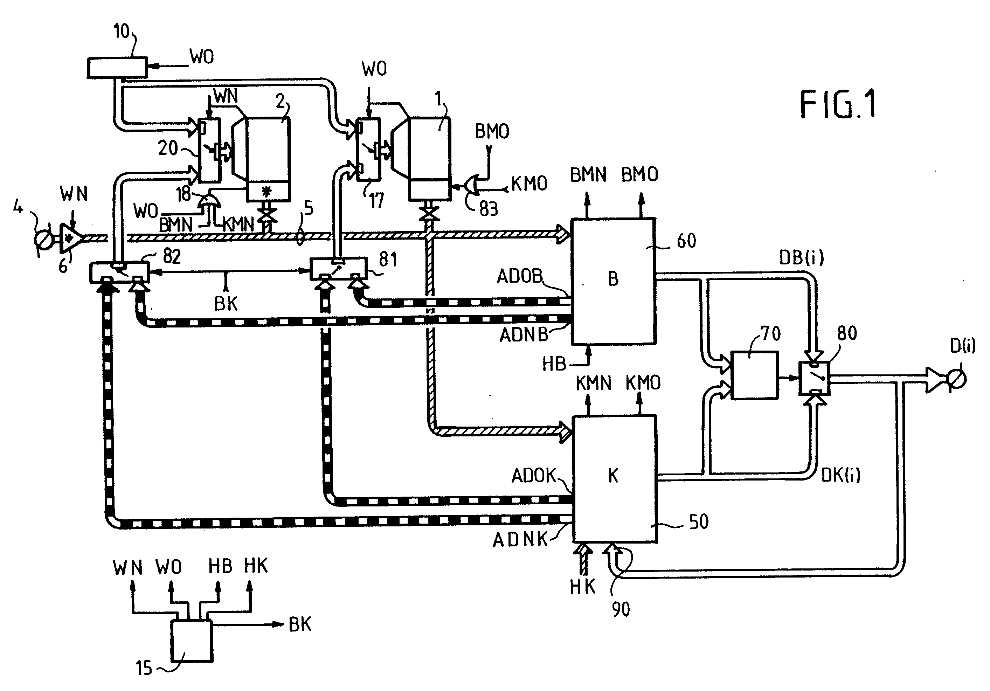

A la figure 1, on a représenté schématiquement le dispositif de traitement d'images pour l'estimation du déplacement d'objets dans celles-ci. Ce dispositif comporte une première mémoire 1 pour emmagasiner toutes les informations concernant une image d'une séquence d'images et une deuxième mémoire 2 pour emmagasiner l'image suivante de la séquence.

On explique, pour commencer, comment ces mémoires 1 et 2 enregistrent deux images successives.

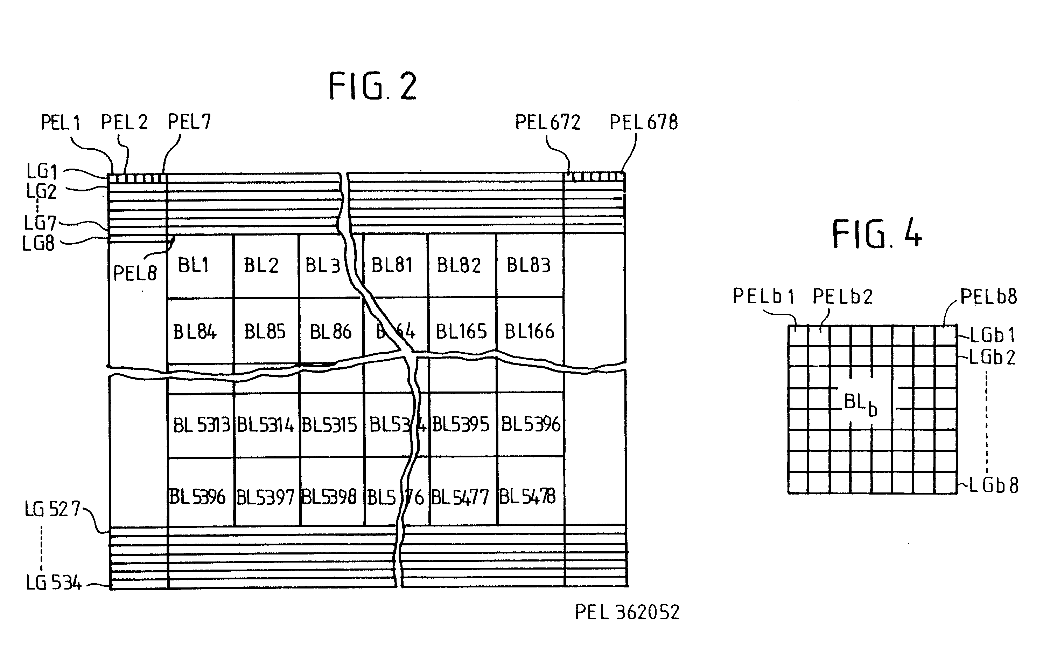

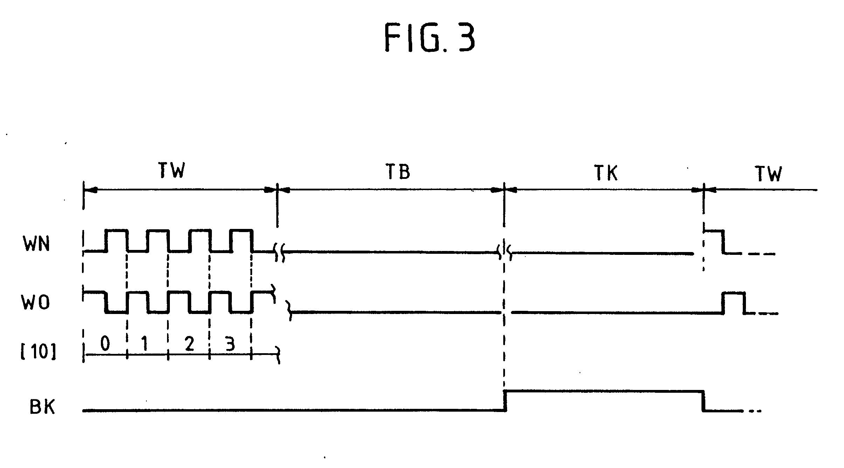

Pour être enregistrées dans ces mémoires 1 et 2 les images sont décomposées par exemple en 534 lignes LG1, LG2, ..., LG534 (figure 2), et chaque ligne en 678 points élémentaires ou "pels" (PEL1, PEL2, ..., PEL678 pour la ligne LG1). Le niveau de luminance de chacun de ces pels est codé sous forme numérique par un mot binaire de huit éléments. Ces mots sont fournis à une extrémité 4 connectée à une ligne de données 5 par l'intermédiaire d'un ensemble d'amplificateurs à trois états 6 mis à l'état passant par un signal WN. Cette ligne est reliée aux accès de données des mémoires 1 et 2. Ces mots vont être rangés dans les mémoires 1 et 2 en des emplacements définis par un compteur d'adresses d'écriture 10, pendant le temps d'écriture TW (figure 3). Les différents points élémentaires sont rangés continûment dans ces mémoires c'est-à-dire : le point PEL1 est rangé à l'adresse "0", PEL2 à l'adresse "1", ..., PEL678 à l'adresse "677", le point de la ligne suivante PEL679 est rangé à l'adresse "678" ... jusqu'au dernier point PEL362052, rangé à l'adresse "362051". Pendant ce laps de temps TW, pour un code d'adresse fourni par le compteur d'adresses d'écriture 10, le mot adressé dans la mémoire 2 est rendu disponible sur la ligne de données 5 pour être enregistré dans la mémoire 1, puis le mot présent à l'extrémité 4 est enregistré dans la mémoire 2. Pour exécuter ces opérations, on utilise différents signaux WN et WO élaborés par une base de temps 15 (figure 3) :

- Les signaux WO dont les fronts montants font incrémenter le compteur 10, mettent la mémoire 1 en position d'écriture et son entrée d'adressage en relation, par l'intermédiaire d'un commutateur 17, avec le compteur 10 et rendent passante, par l'intermédiaire d'une porte OU 18, la sortie de données de la mémoire 2.

- Les signaux WN mettent la mémoire 2 en position d'écriture et son entrée d'adressage en relation, par l'intermédiaire d'un commutateur 20, avec le compteur 10.

A la fin de ce laps de temps TW se trouvent donc emmagasinées deux images successives dans les mémoires 1 et 2. A partir des informations contenues dans les mémoires 1 et 2, on se propose d'estimer le déplacement d'objets en deux images successives. Pour cela, on utilise un organe d'estimation par filtrage de KALMAN 50 qui fournit, pour chaque point "i" de l'image contenue dans la mémoire 2, le déplacement $DK(Z_i)$. Dans la suite du présent exposé, la lettre "i" sera assimilée à "$Z_i$". Il convient de noter que ce déplacement $DK(i)$ est une grandeur vectorielle à deux composantes $DK_x(i)$ et $DK_y(i)$. La composante $DK_x$ représente le déplacement horizontal dans la direction des lignes et la composante $DK_y$ le déplacement vertical dans la direction perpendiculaire à celles-ci.

Conformément à l'invention pour fournir une indication de déplacement $D(i)$ de composantes $D_x(i)$ et $D_y(i)$ de la meilleure qualité possible le dispositif montré à la figure 1 est remarquable en ce qu'il est prévu un deuxième organe d'estimation 60 pour fournir pour chaque point "i" un vecteur de déplacement $DB(i)$ de composantes $DB_x(i)$, $DB_y(i)$, un organe de mesure de qualité 70 pour apprécier $DB(i)$ et $DK(i)$ et pour agir sur un sélecteur de vecteurs 80 afin que le vecteur $D(i)$ soit celui des deux vecteurs $DB(i)$ et $DK(i)$ donnant la meilleure qualité d'estimation et en ce qu'il est prévu un accès 90 sur l'organe de filtrage 50 pour recevoir ce vecteur $D(i)$.

Selon le mode de réalisation représenté, le deuxième organe d'estimation 60 effectue une corrélation

3

par blocs décrite dans le deuxième article précité, l'estimation du vecteur DB(i) est effectuée la première pendant le laps de temps TB survenant après le laps de temps TW au rythme des signaux HB fournis par la base de temps 15. Cet organe 60 utilise les mots contenus dans les mémoires 1 et 2 ; pour cela il est pourvu d'accès ADOB et ADNB pour transmettre des codes d'adresses vers les mémoires 1 et 2 via des commutateurs 81 et 82. Les sorties de données de ces mémoires sont mis à l'état passant par des signaux BMN et BMO agissant pour le premier via la porte 18 et pour le deuxième via une porte OU 83.

Une fois que l'estimation des vecteurs DB(i) a été effectuée elle est mise en mémoire d'une manière qui sera décrite plus loin. Un signal élaboré par la base de temps 15 provoque le changement de position des commutateurs 81 et 82, mettant en relation les entrées de code d'adresses des mémoires 1 et 2 avec les accès ADNK et ADNO prévus sur l'organe de filtrage 50. Des signaux KMN et KMO appliqués à ces mémoires via les portes 18 et 83 rendent accessibles les données de celles-ci. On effectue alors l'estimation des vecteurs DK(i) au moyen de l'organe d'estimation 50 pendant le laps de temps TK au rythme de signaux HK fournis par la base de temps 15. L'organe de mesure de qualité 70 compare pour chaque point "i" les vecteurs DK(i) avec les vecteurs DB(i) relatifs donc au même point "i" ; celui qui donne la meilleure estimation du déplacement est retenu au moyen du sélecteur 80 pour, d'une part, constituer le vecteur D(i) de déplacement effectif et pour, d'autre part, être utilisé par l'organe de filtrage de KALMAN 50 pour l'estimation du vecteur DK(i + 1).

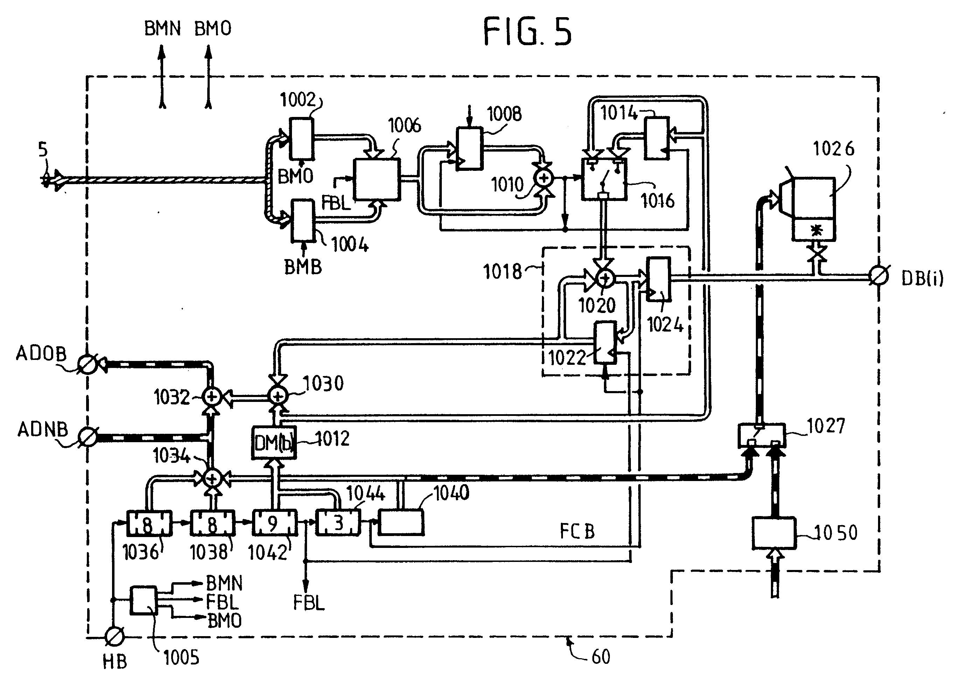

Le deuxième organe d'estimation 60 opère sur des blocs d'éléments d'images. Les différents blocs d'éléments d'image que l'on va considérer sont au nombre de 5478 et sont formés (figure 4) de 8 lignes LGb1, LGb2, ..., LGb8 dont la longueur comporte 8 éléments d'images PELb1, PELb2, ..., PELb8 et sont disposés de manière contiguë. Ces blocs ont des places fixes dans l'image récente (c'est-à-dire celle emmagasinée dans la mémoire 2) ; ainsi l'élément PELb1 de la ligne LGb1 du bloc BL1 correspond à l'élément PEL8 de la ligne LG8 de l'image. Par contre, on va considérer différents blocs de l'image ancienne (celle enregistrée dans la mémoire 1) pour les comparer à chacun des blocs de l'image récente ainsi définis. Cette comparaison s'effectue dans cet exemple décrit en trois étapes. On considère, pour l'explication qui va suivre, d'une part le bloc BL1 de l'image récente et d'autre part les différents blocs de l'image ancienne repérés par leur élément PELb1 de la ligne LGb1 :

- Première étape : on détermine parmi les blocs suivants de l'image ancienne celui qui donne la meilleure corrélation mesurée par l'organe 1006,

PEL8, LG8 et PEL(8 ± 4), LG(8 ± 4) c'est-à-dire :

PEL4, LG4
PEL8, LG4
PEL12, LG4
PEL4, LG8
PEL12, LG8
PEL4, LG12
PEL8, LG12
PEL12, LG12

On admet que c'est le bloc PEL8, LG12 qui a donné la meilleure corrélation. On passe à la deuxième étape.

- Deuxième étape : on détermine à partir du bloc PEL8, LG12 celui qui parmi les blocs suivants donne la meilleure corrélation.

PEL8, LG12 et PEL(8 ± 2), LG(12 ± 2) c'est-à-dire :

PEL6, LG10
PEL8, LG10
PEL10, LG10
PEL6, LG12
PEL10, LG12
PEL6, LG14
PEL8, LG14
PEL10, LG14

On admet maintenant que c'est le bloc PEL10, LG14 qui donne la meilleure corrélation ; on peut alors passer à l'étape suivante.

- Troisième étape : on détermine parmi les blocs suivants celui qui donne la meilleure corrélation.

PEL10, LG14 et PEL(10 ± 1), LG(14 ± 1) c'est-à-dire :

PEL9, LG13
PEL10, LG13
PEL11, LG13

4

PEL9, LG14
PEL11, LG14
PEL9, LG15
PEL10, LG15
PEL11, LG15

En admettant que c'est le bloc PEL11, LG14 qui donne la meilleure corrélation, on détermine ainsi le vecteur déplacement qui est défini par l'emplacement de ce dernier bloc (PEL11, LG14) et l'emplacement du bloc BL1 (c'est-à-dire PEL8, LG8).

L'organe d'estimation 60 opérant sur les bases précitées est représenté à la figure 5. Il se compose tout d'abord de deux registres 1002 et 1004 destinés respectivement à emmagasiner les mots binaires provenant des mémoires 1 et 2 qui sont adressées par les codes d'adresses transmis sur les accès ADOB et ADNB. Des signaux BMN et BMO élaborés au moyen d'un circuit d'horloge 1005 à partir du signal HB sont actifs pour la lecture de ces mémoires et ils permettent l'enregistrement dans ces registres des mots lus provenant de ces mémoires. Un organe de calcul 1006 effectue le calcul de corrélation pour chacun des blocs envisagés et la valeur de sortie est validée par un signal FBL signalant la fin d'un traitement d'un bloc ; le résultat de cet organe de calcul est appliqué d'une part à l'entrée d'un registre 1008 et d'autre part à une entrée d'un organe de soustraction 1010 dont l'autre entrée est connectée à la sortie du registre 1008. Du résultat élaboré par cet organe 1010, on ne considère que la valeur de son signe. Cette valeur autorise ou non le chargement de la valeur de corrélation dans le registre 1008, autorise ou non le chargement d'une valeur DM(b) provenant d'une mémoire morte 1012 dans un registre 1014 et enfin commande la position de commutation d'un commutateur 1016. C'est dans cette mémoire morte 1012 que sont emmagasinés les différents vecteurs de déplacement $D_{0,0}$ ... $D_{0,8}$, $D_{1,0}$, ... $D_{1,8}$, $D_{2,0}$ ... $D_{2,8}$ correspondant à ce qui a été dit ci-dessus. Dans une première position la sortie de ce commutateur 1016 est reliée à la sortie du registre 1014 et dans l'autre position, la deuxième, la sortie est reliée à l'entrée de ce registre 1014. Un organe accumulateur 1018 est connecté à la sortie du commutateur 1016 ; cet organe est formé d'un additionneur 1020 et de deux registres : un registre d'accumulation 1022 et un registre de sortie 1024, connectés à sa sortie ; les commandes de chargement de ces registres reçoivent respectivement les signaux FBL et FCB. C'est à la sortie du registre 1024 qu'apparaît l'indication de déplacement ; cette indication est mémorisée dans une mémoire 1026 adressée par le code de sortie d'un commutateur 1027 de codes d'adresses. L'additionneur 1020 effectue la somme des valeurs disponibles à la sortie du commutateur 1016 et du registre 1022. Un autre additionneur portant la référence 1030 effectue la somme des valeurs apparaissant d'une part à la sortie de l'organe accumulateur 1018 ou plus précisément à la sortie du registre 1022 et d'autre part à la sortie de la mémoire morte 1012. Cet additionneur 1030 fournit à un autre additionneur 1032 la valeur à ajouter au code d'adresse de lecture de la mémoire 2 (code ADNB) pour obtenir le code de lecture de la mémoire 1 (code ADOB). Le code ADNB est obtenu par un additionneur 1034 effectuant la somme des contenus de différents compteurs 1036, 1038 et 1040. Le compteur 1036 est un compteur modulo 8 dont le contenu sert à adresser les 8 éléments d'images (pel) d'une ligne de bloc ; les signaux HB de comptage sont divisés par huit à la sortie de ce compteur et incrémentent alors le contenu du compteur modulo 8, 1038 pour adresser les 8 lignes d'un bloc ; les signaux de sortie de ce compteur 1038 sont appliqués à l'entrée de signaux de comptage d'un compteur modulo 9, référencé par 1042 et les signaux de sortie de ce compteur 1042 à un compteur modulo 3, 1044. Le contenu du compteur 1040 modulo "5478" s'incrémentant sur les signaux de sortie du compteur 1042 donne l'adresse du bloc. Le contenu de ce compteur 1040 est utilisé aussi pour adresser la mémoire 1026 via le commutateur 1027, et ainsi pour enregistrer les valeurs DB(i). Dans le but de pouvoir comparer DB(i) avec DK(i) le commutateur 1027 peut brancher l'entrée d'adressage de la mémoire 1026 à la sortie d'un organe de transcodage 1050 qui donne l'adresse du bloc pour tout code d'élément d'image.

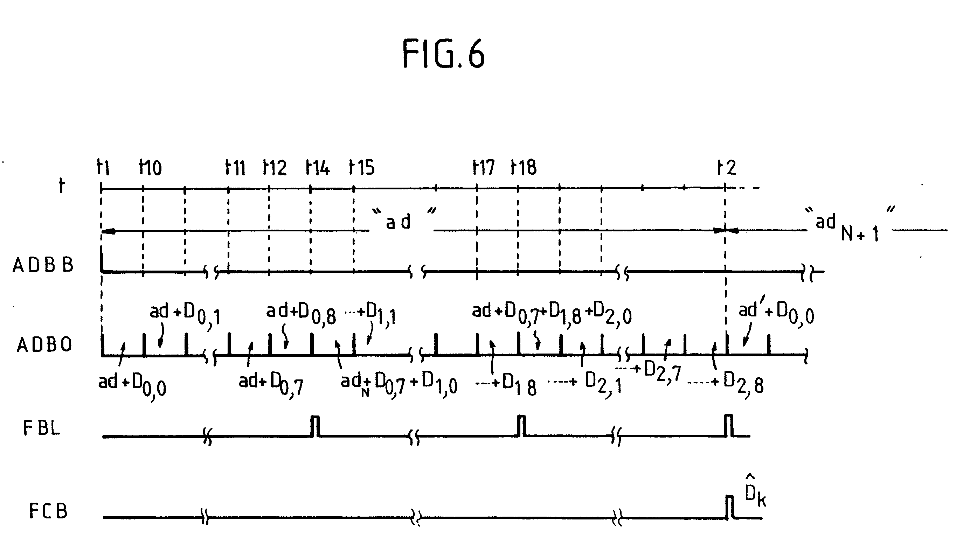

On peut alors expliquer le fonctionnement de l'organe d'estimation 60. On se reporte à la figure 6. On se place à l'instant "$t_1$" où le code ADBB, fourni par le compteur 1040 est égal à une valeur "ad" et définit ainsi un bloc dans la mémoire 2 ; ce code reste fixe jusqu'à l'instant "$t_2$" pendant une durée suffisante pour déterminer le bloc dans la mémoire 1 qui donne la meilleure corrélation. Les compteurs 1036 et 1038 vont adresser successivement à la fois les différents éléments binaires des blocs appartenant à la mémoire 2 et les différents éléments binaires des blocs de la mémoire 1. L'additionneur 1034 combine les contenus des compteurs 1036, 1038 et 1040. Par suite de la présence des compteurs 1042 et 1044 entre les instants "$t_1$" et "$t_2$" le bloc défini par l'adresse "ad" sera lu vingt-sept fois, c'est-à-dire que cela correspond aux neuf corrélations qu'impose chacune des trois étapes précitées. Le signal FBL de sortie du compteur 1042 permet notamment d'enregistrer dans le registre 1022 l'emplacement du bloc qui a donné la meilleure corrélation. Cette information combinée avec celle fournie par la mémoire 1012 donne l'emplacement du bloc à lire dans la mémoire 1. La mémoire 1012 fournit, aux instants $t_1$, $t_{10}$, $t_{11}$ et $t_{12}$ les incréments

(positifs ou négatifs) $D_{0,0}$, $D_{0,1}$, ..., $D_{0,7}$ et $D_{0,8}$ à apporter à la valeur "ad". A l'instant $t_{14}$ le signal FBL devient actif de sorte que l'une des valeurs $D_{0,0}$ à $D_{0,8}$ est enregistrée dans le registre 1022. Si on admet que c'est la valeur $D_{0,7}$, l'incrément apporté à la valeur "ad" sera $D_{0,7} + D_{1,0}$ après l'instant $t_{14}$, puis $D_{0,7} + D_{1,1}$ à l'instant $t_{15}$ et ainsi de suite jusqu'à l'instant $t_{17}$ où l'on a ad $+ D_{0,7} + D_{1,8}$. Si l'on admet la valeur, $D_{1,8}$ procure une meilleure corrélation, on aura après l'instant $t_{18}$ une valeur ad $+ D_{0,7} + D_{1,8} + D_{2,0}$ et le processus se continue ainsi jusqu'à l'instant $t_2$ où le signal FCB devient actif pour enregistrer dans le registre 1023 la valeur retenue.

L'organe d'estimation par filtrage de KALMAN 50 fonctionne sur les considérations suivantes :

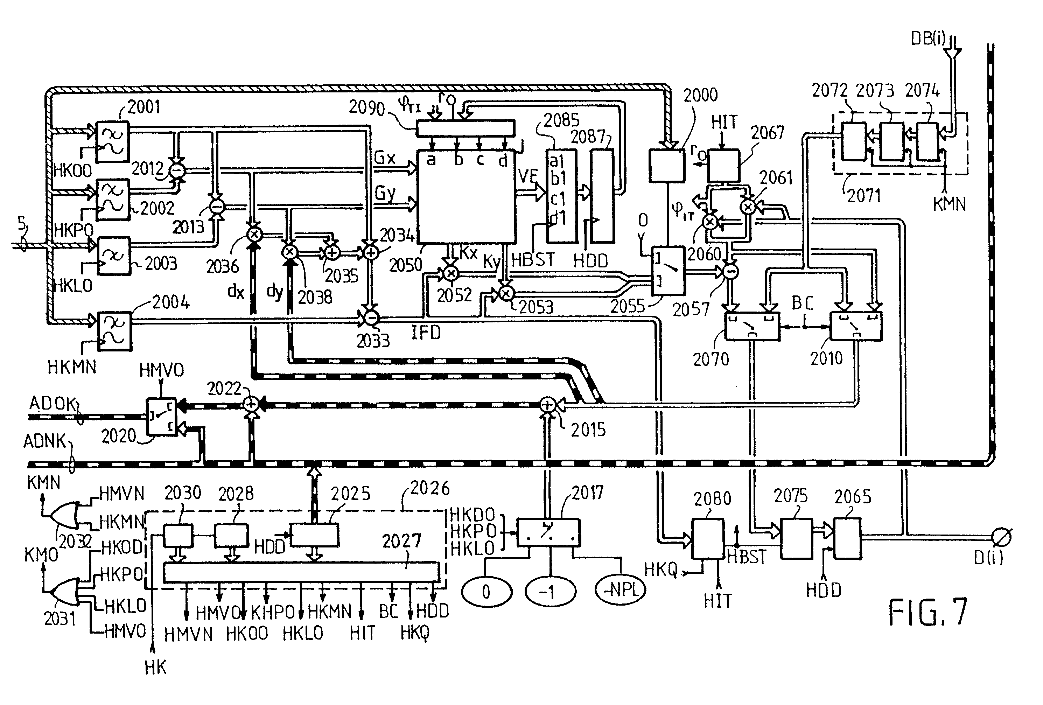

On se propose d'évaluer le vecteur de déplacement DK(i) pour un point "i" entre deux trames se succédant respectivement aux instants "t-TR" et "t". A la figure 7, on a représenté un point O(i) sur une trame survenant à l'instant "t-T". Ce point O a pour coordonnée $Z_i$ représentant d'une part les abscisses "$x_i$" qui correspondent à sa place sur une ligne et d'autre part "$y_i$" correspond au numéro de la ligne. Sur la trame suivante, ce point O peut se déplacer selon un vecteur DK(i) de composante $DK_x$, $DK_y$. Si on appelle $I(Z_i)$ l'intensité lumineuse relative de ce point, on peut écrire :

$I(Z_i, t-TR) = O(Z_i, t-TR) + n(Z_i, t-TR)$

$O(Z_i, t) = O(Z_i - DK_i, t-TR)$

où n(...) représente la composante de bruit.

On appelle $FD(Z_i)$ la différence de trame pour un point de coordonnée $Z_i$ qui s'écrit donc :

$FD(Z_i) = I(Z_i, t) - I(Z_i, t-T)$

ou encore :

$FD(Z_i) = O(Z_i - DK_i, t-T) - O(Z_i, t-T) + n(Z, t) - n(Z, t-T)$.

Si $DK_i$ est petit on effectue un développement en série de TAYLOR :

$$FD(t_i) = \frac{\partial O}{\partial DK_{xi}} DK_{xi} + \frac{\partial O}{\partial DK_{yi}} DK_{yi} + f(DK_i)$$

où f représente une fonction de $DK_i$ d'ordre supérieur à 2.

En appelant $G(Z_i)$ le gradient $\frac{\partial O}{\partial D}$ et l'astérisque * signifiant qu'il faut considérer le vecteur ou la matrice transposée selon le cas, a donc l'expression de la mesure du filtre de KALMAN :

$FD(Z_i) = - G^*(Z_i) \cdot DK(i) + N(Z_i)$

où $N(Z_i)$ est le bruit de mesure.

On admet que le déplacement pour un point de coordonnée $Z_i$ n'est pas tellement différent d'un point proche par exemple le pel précédent de coordonnée $Z_{i-1}$ de sorte que l'on peut écrire :

$DK(Z_i) = \phi DK(Z_{i-1}) + W(Z_{i-1})$

$\phi$ est une matrice de transition prédéfinie

W(...) est une composante de bruit blanc.

On appelle $DP(Z_i)$ le déplacement prédit à partir de l'estimation du déplacement $DK(Z_{i-1})$ du pixel précédent situé donc en $Z_{i-1}$.

$DP(Z_i) = \phi \cdot DK(Z_{i-1})$

De cette prédiction on détermine une prédiction de la différence de trame $FDP(Z_i)$ :

$FDP(Z_i) = - G(Z_i) \cdot DP(Z_i)$

Le filtrage selon la théorie de KALMAN consiste à considérer l'opération suivante :

$$DK(Z_i) = \Phi \cdot DK(Z_{i-1}) + K(Z_i) \cdot IFD(Z_i) \qquad (8)$$

$IFD(Z_i)$ est appelé communément, selon cette théorie, innovation et appliquée au cas envisagé dans la présente invention ; cette grandeur peut s'écrire :

$$IFD(Z_i) = I(Z_i, t) - I(Z_i - DK(Z_i), t-TR) \qquad (9)$$

$K(Z_i)$ est le gain de KALMAN qui est ici un vecteur à deux composantes $K_x(Z_i)$ et $K_y(Z_i)$.

$$K(Z_i) = VP(Z_i) \cdot H(Z_i)^* \cdot \sigma \qquad (10)$$

6

où $H(Z_i) = - G^*(Z_i)$
et $\sigma = [H(Z_i).VP(Z_i).H(Z_i)^* + r^2(Z_i)]^{-1}$
$r^2$ représente le bruit.

$$VP(Z_i) = \Phi.VE(Z_{i-1}).\Phi^* + Q(Z_{i-1}) \qquad (10bis)$$

$$VE(Z_{i-1}) = [I - K(Z_{i-1}).H(Z_{i-1}).VP(Z_{i-1})] \qquad (11)$$

où I est la matrice unité.

On explicite la matrice représentant $VE(Z_{i-1})$ :

$$VE(Z_{i-1}) = \begin{vmatrix} a_1 & b_1 \\ c_1 & d_1 \end{vmatrix} \qquad (12)$$

et la matrice $VP(Z_i)$ :

$$VP(Z_i) = \begin{vmatrix} a & b \\ c & d \end{vmatrix}$$

on prend comme condition initiale :

$$VE(Z_0) = \begin{vmatrix} ka & 0 \\ 0 & kd \end{vmatrix}$$

$$DE(Z_0) = \begin{vmatrix} 0 & 0 \\ 0 & 0 \end{vmatrix}$$

l'organe de filtrage de KALMAN va donc opérer de la manière suivante, en plusieurs étapes sur plusieurs itérations : ainsi, pour l'itération "i" relative au point "i" :

Première étape : calcul du gain de KALMAN $K(Z_i)$, pour cela on détermine :
- $H(Z_i)$ ou $G(Z_i)$ par analyse de l'image contenue dans la mémoire 1.
- $VP(Z_i)$ en fonction de la valeur $VE(Z_{i-1})$ déterminée à l'itération précédente.
- On applique alors la formule (10).

Deuxième étape : calcul du vecteur déplacement estimé $DK(Z_i)$ formule (8) ; cela est déterminé par la mesure de $\overline{IFD}$ (formule (9)).

Troisième étape : mise en mémoire pour l'itération "i + 1" des valeurs :
$\overline{VE(Z_i)}$ et $\overline{DK(Z_i)}$

DE étant, selon l'invention, la valeur $D(Z_i)$, c'est-à-dire la valeur déterminée par l'organe 70.

Selon une caractéristique importante de l'invention pour chaque itération "i" on effectue plusieurs fois les trois étapes avec $\phi$ et r différents ; la valeur $DK(Z_i)$ retenue est celle qui donne une valeur IFD la plus faible possible.

A la figure 7 on a représenté plus en détail l'organe d'estimation par filtrage de KALMAN 50, combiné avec les organes d'estimation d'erreur 70 et l'organe de commutation 80.

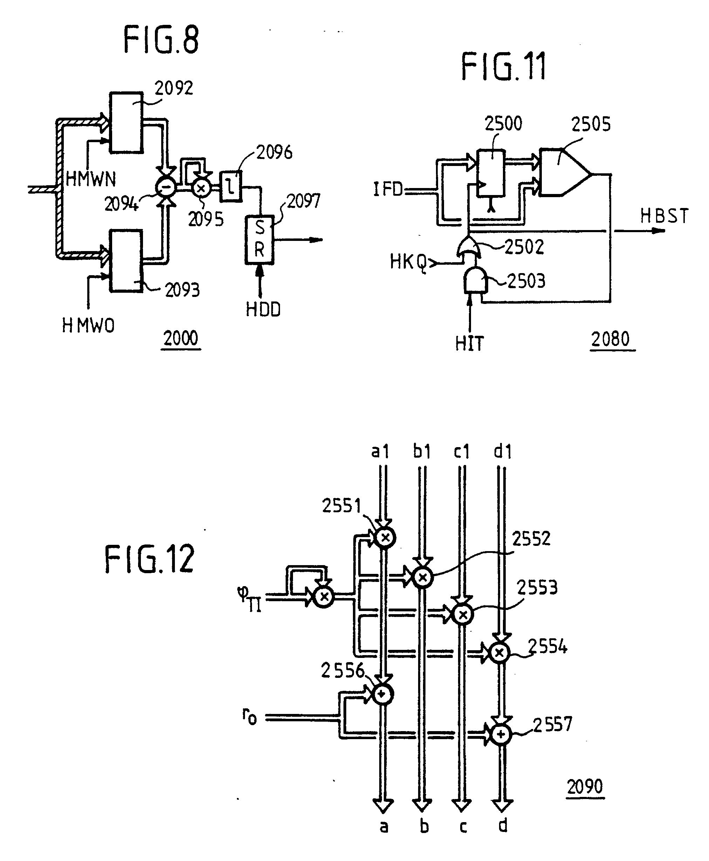

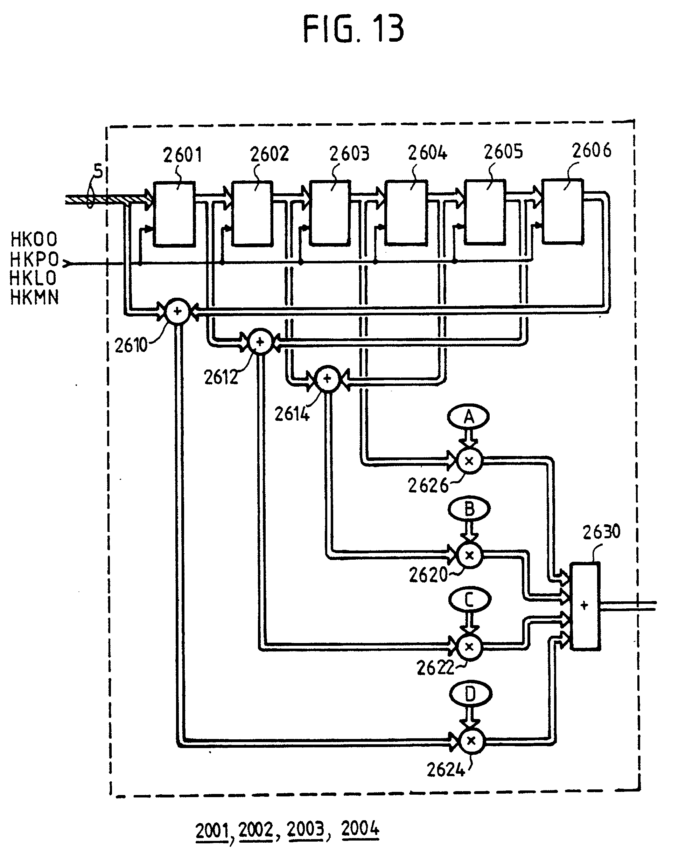

La ligne de données 5 est connectée aux entrées d'un dispositif de détection de mouvement 2000 (montré en détail à la figure 8) et de quatre filtres passe-bas numériques 2001, 2002, 2003 et 2004 montrés en détail à la figure 13) dont les entrées de rythme de fonctionnement reçoivent respectivement les signaux HKOO, HKPO, HKLO et HKMN. Ces filtres réduisent d'un tiers les composantes fréquentielles d'image et amènent un retard de trois éléments d'image. Le filtre 2001 est destiné à traiter l'information de luminance relative à l'élément d'image qui est contenu dans la mémoire 1 et dont l'adresse est définie par un code de déplacement disponible à la sortie d'un commutateur 2010. Le filtre 2002 est destiné à trailer l'information de luminance relative à l'élément d'image précédent de la même ligne. Le filtre 2003 est destiné a traiter l'information de luminance relative à l'élément d'image de la ligne précédente ; grâce à ces informations il est possible d'obtenir à la sortie de soustracteurs 2012 et 2013 le gradient de luminance Gx et Gy de l'élément d'image défini par le code de sortie du commutateur 2010. Pour cela, les entrées du soustracteur

7

2012 sont reliées respectivement aux sorties des filtres 2001 et 2002 et les entrées du soustracteur 2013 aux sorties des filtres 2001 et 2003. Pour adresser ces différents éléments le code de sortie du commutateur 2010 est modifié ou non par un additionneur 2015 qui additionne ce code de sortie au code présent à la sortie d'un commutateur 2017 aux entrées duquel on applique un "O" signifiant que le code du commutateur 2010 n'a pas à être modifié, un code "-1" signifiant que l'on veut considérer l'élément d'image précédent, et un code -NPL signifiant que l'on veut considérer l'élément d'image de la ligne précédente. Les positions de ce commutateur 2017 sont donc asservies au moyen des signaux HKPO, HKOO et HKLO. Le code d'adresses effectivement appliqué à la mémoire 1 provient de la sortie d'un commutateur 2020 à deux entrées dont l'une est connectée à la sortie d'un additionneur 2022 et l'autre, à la sortie d'un compteur d'adresse 2025 utilisé surtout pour adresser la mémoire 2 et faisant partie d'une base de temps 2026 alimentée par les signaux HK.

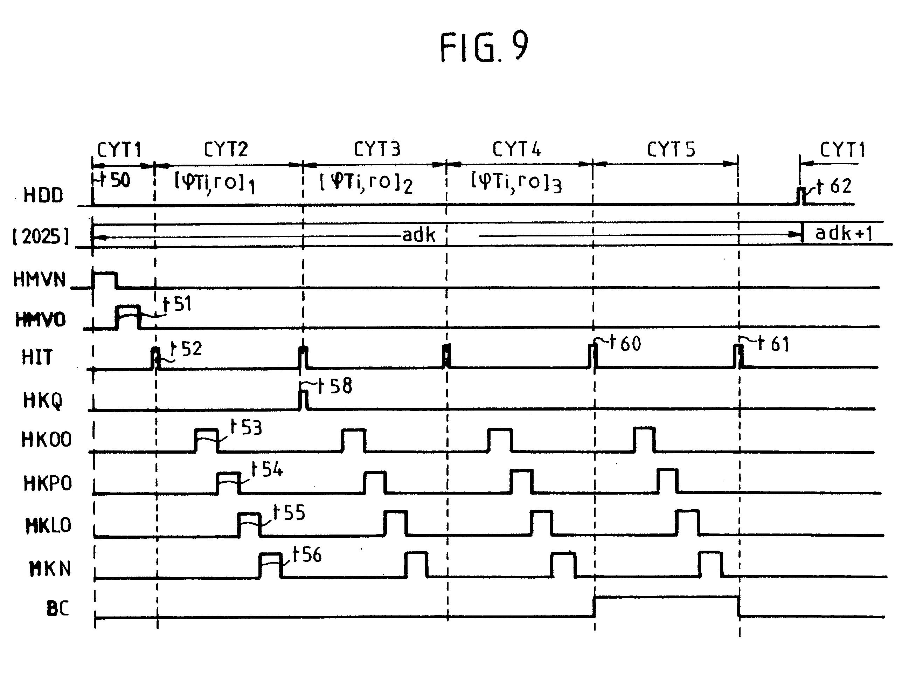

Les entrées de l'additionneur 2022 sont reliées respectivement à ce compteur 2025 et à la sortie de l'additionneur 2015. Le compteur 2025 s'incrémente au rythme des signaux HDD qui sont élaborés par un décodeur 2027 coopérant avec un compteur d'itérations 2028 ; de ce décodeur on dérive notamment un signal BC, un signal HKO et un signal HIT. Par cette base de temps 2026 sont élaborés en plus au moyen du décodeur 2027 et d'un compteur auxiliaire 2030 les signaux HKOO, HKPO, HKLO et HKMN déjà cités et aussi un signal HMVO pour la commande de position du commutateur 2020 et un dernier signal HMVN. L'allure de tous ces signaux est montrée à la figure 9. On notera aussi la présence d'une porte OU 2031 qui élabore pour la mémoire 1 le signal KMO à partir des signaux KHOO, HKPO, HKLO, et HMVO et d'une porte OU 2032 qui élabore pour la mémoire 2 le signal KMN à partir des signaux HKMN et HMVN.

Le filtre 2004 est destiné à traiter l'information de luminance relative à l'élément d'image contenu dans la mémoire 2 et dont l'adresse est donnée par le contenu du compteur 2025. Un soustracteur 2033 va fournir l'innovation IFD (voir formule (9)) ; pour cela, une de ses entrées est connectée à la sortie du filtre 2004 et l'autre entrée à la sortie d'un additionneur 2034 qui, à l'information contenue dans le registre 2001, ajoute une grandeur de correction ou d'interpolation fournie par un additionneur 2035.

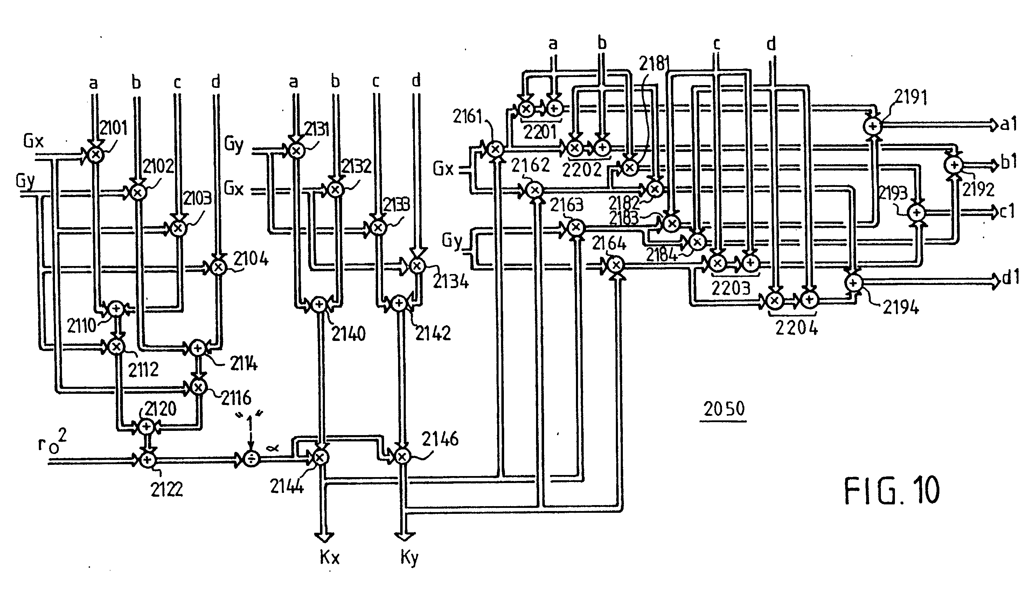

L'information à la sortie du commutateur 2010, résultant de différents traitements, se décompose en deux parties : une partie entière qui peut être utilisée pour l'adressage des mémoires 1 et 2 et une partie fractionnaire décomposée elle-même selon deux composantes dx et dy. L'organe d'addition 2035 effectue la somme des résultats effectuée par des multiplieurs 2036 et 2038 c'est-à-dire : Gx.dx et Gy.dy. Un réseau de calcul 2050 (montré en détail à la figure 10) calcule le gain de KALMAN ; cette grandeur est vectorielle et a deux composants Kx et Ky qui sont multipliés chacun par un multiplieur 2052 et 2053 à la grandeur IFD. Le signal résultant de cette opération par K est appliqué à l'une des deux entrées d'un commutateur 2055 dont l'autre entrée reçoit un signal "O". Les positions de ce commutateur sont commandées par le signal de sortie du détecteur de mouvement, de sorte que c'est la valeur "O" qui se retrouve à la sortie du commutateur 2055 lorsqu'aucun mouvement n'a été détecté. Si un mouvement a été détecté, la sortie du commutateur 2055 est mise en relation avec les sorties des multiplieurs 2052 et 2053. Un additionneur 2057 fournit le résultat indiqué à la formule (8). L'opération de multiplication matricielle par $\phi$ est simplifiée, en ce sens que la matrice $\phi$ se présente sous la forme : $\phi = I.\phi_{iT}$ où I est la matrice unitaire et $\phi_{iT}$ un scalaire. Cependant, selon un aspect important de l'invention, différentes valeurs de $\phi_{iT}$ vont être successivement multipliées par des multiplieurs 2060 et 2061 aux composantes du vecteur DK($Z_{i-1}$) contenu dans un registre 2065. Les différentes valeurs de $\phi_{iT}$ sont sorties d'un organe précâblé 2067 au rythme des signaux HIT. La sortie de l'additionneur 2057 est connectée à l'une des deux entrées d'un commutateur 2070 dont l'autre est connectée à la sortie de données de la mémoire 1026 (figure 5) par l'intermédiaire d'un organe de retard 2071. Cet organe a pour but de compenser le retard de trois éléments d'image apporté par les filtres 2001, 2002, 2003 et 2004. A cet effet, il est formé de trois registres 2072, 2073 et 2074 montés en cascade et dont les entrées d'enregistrement reçoivent le signal KMN. Le changement de position de ce commutateur 2070 est déterminé par le signal BC. La sortie du commutateur 2070 est connectée à l'entrée d'un registre 2075 dont la sortie est reliée à l'entrée du registre 2065. Les signaux de commande d'enregistrement pour les registres 2075 et 2065 sont respectivement un signal HBST et le signal HDD. Le signal HBST est actif pour enregistrer la meilleure estimation et est élaboré par l'organe d'estimation de qualité 2080, en fonction de la valeur IFD ;cet organe 2080 est montré en détail à la figure 11. Le réseau de calcul 2050 fournit aussi la grandeur VE (voir formules (11) et (12)). Cette grandeur est appliquée à l'entrée d'un premier registre 2085 dont la sortie est reliée à l'entrée d'un deuxième registre 2087. Les signaux de commande d'enregistrement de ces registres sont les mêmes que ceux des registres 2075 et 2065, c'est-à-dire les signaux HBST et HDD. Un circuit de calcul 2090 montré en détail à la figure 12 élabore la grandeur VP.

Le détecteur de mouvement représenté à la figure 8 se compose de deux registres 2092 et 2093 prévus pour enregistrer des mots provenant respectivement des mémoires 1 et 2 et situés à la même

8

adresse ; pour cela on active pour chaque code d'adresse, élaboré par le compteur 2025, le signal HMVN pour enregistrer la donnée de la mémoire 2 dans le registre 2092 et le signal HMVO pour enregistrer la donnée de la mémoire 1 dans le registre 2093, ce deuxième signal agissant sur le commutateur 2020 (figure 7). Un soustracteur 2094 effectue la différence des contenus de ces deux registres 2092 et 2093 ; au moyen d'un multiplieur 2095 on détermine le carré de cette valeur ; si cette valeur est inférieure à un certain seuil déterminé par le dispositif à seuil 2096, on positionne à "1" une bascule 2097 de sorte qu'à la sortie du commutateur 2055 (figure 7) on a un signal "O" indiquant qu'il n'y a pas de mouvement. Cette bascule 2097 est remise à zéro par le signal HDD.

On décrit maintenant le réseau de calcul 2050 montré en détail à la figure 10. Il comporte une première série de multiplieurs 2101, 2102, 2103 et 2104 pour effectuer respectivement les opérations : a.Gx, b.Gy, c.Gx, d.Gy. Un additionneur 2110 fournit (a.Gx) + (c.Gx). Un multiplieur 2112 fournit Gy[(a.Gx) + (c.Gy)], un additionneur 2114 fournit (d.Gy) + (b.Gy) et un multiplieur 2116 Gx[(d.Gy) + (b.Gy)]. Ces deux quantités données par les multiplieurs 2112 et 2116 sont additionnées entre elles par l'additionneur 2120 et enfin, à ce résultat on ajoute la quantité $r^2_0$ fournie par le circuit 2067 au moyen de l'additionneur 2122. Au moyen d'un diviseur 2124 on prend l'inverse de la quantité élaborée par l'additionneur 2122. Si on appelle $\alpha$ la quantité inverse, on a :

$\alpha^{-1} = Gx(a.Gx + c.Gy) + Gy(b.Gx + d.Gy)$

Une deuxième série de multiplieurs 2131, 2132, 2133 et 2134 effectue respectivement les opérations suivantes :

a.Gy

b.Gx

c.Gy

d.Gx

un additionneur 2140 fournit :

a.Gy + b.Gx

un additionneur 2142 fournit :

c.Gy + d.Gx

Le gain de KALMAN est finalement donné par les multiplieurs 2144 et 2146.

$Kx = (a.Gy + b.Gx).\alpha$

$Ky = (c.Gy + d.Gx).\alpha$

Le reste du circuit est utilisé pour déterminer les composantes a1, b1, c1, d1 de la grandeur VE. Pour cela une troisième série de multiplieurs 2161, 2162, 2163 et 2164 fournit respectivement :

Gx.Kx

Gx.Ky

Gy.Kx

Gy.Ky

Une quatrième série de multiplieurs 2181, 2182, 2183 et 2184 fournit respectivement :

(Gx.Ky).a

(Gx.Ky).b

(Gy.Kx).c

(Gy.Kx).d

Quatre additionneurs 2191, 2192, 2193 et 2194 fournissent les valeurs a1, b1, c1 et d1 à partir de, respectivement, les résultats fournis par quatre couples de multiplieurs-additionneurs 2201, 2202, 2203 et 2204 :

(Kx.Gx + 1)a

(Kx.Gx + 1)b

(Ky.Gy + 1)c

(Ky.Gy + 1)d

d'où finalement :

a1 = a(1 + Kx.Gx) + c.Kx.Gy

b1 = b(1 + Kx.Gx) + d.Kx.Gy

c1 = c(1 + Ky.Gy) + a.Ky.Gx

d1 = d(1 + Ky.Gy) + b.Ky.Gx

L'organe d'estimation de qualité montré à la figure 11 se compose tout d'abord d'un registre 2500 dont l'entrée reçoit le signal IFD et dont le signal de commande d'enregistrement provient d'une porte OU 2502 à deux entrées dont une entrée reçoit le signal HKQ et l'autre le signal de sortie d'une porte ET 2503. Cette porte ET 2503 est munie de deux entrées dont l'une reçoit le signal HIT et l'autre le signal de sortie d'un comparateur 2505. Ce comparateur est prévu pour comparer l'information contenue dans le registre 2500 et IFD. Le signal de sortie HBST est fourni par la porte 2502. Le comparateur fournit un "O" lorsque la grandeur contenue dans le registre 2500 est supérieure à IFD. Ainsi, dans le registre 2500 est contenue la valeur minimale de IFD pendant tout le cycle de traitement compris entre deux apparitions du signal HKQ.

A la figure 12 on montre la structure du réseau de calcul 2090 ; il se compose d'une série de multiplieurs 2551, 2552, 2553 et 2554 qui effectuent respectivement les opérations suivantes :

$$a1.\phi^2_{Ti}$$
$$b1.\phi^2_{Ti}$$
$$c1.\phi^2_{Ti}$$
$$d1.\phi^2_{Ti}$$

et de deux additionneurs 2556 et 2557, le tout fournissant finalement :

$$a = a1.\phi^2_{Ti} + r_0$$
$$b = b1.\phi^2_{Ti}$$
$$c = c1.\phi^2_{Ti}$$
$$d = d1.\phi^2_{Ti} + r_0$$

La figure 13 représente en détail la structure des filtres 2001, 2002, 2003 et 2004 ; ils sont composés de six registres 2601, 2602, 2603, 2604, 2605 et 2606 montés en cascade ; chacun de ces registres est muni d'une entrée d'enregistrement qui reçoit les signaux de rythme HKOO, HKPO, HKLO et HKMN respectivement pour les filtres 2001, 2002, 2003 et 2004. Un premier additionneur 2610 effectue la somme des données à l'entrée du registre 2601 et à la sortie du registre 2606 un deuxième additionneur 2612 effectue la somme des données aux sorties des registres 2601 et 2605 et un troisième additionneur 2614 la somme des données aux sorties des registres 2602 et 2604. Puis trois multiplieurs 2620, 2622 et 2624 multiplient respectivement par des coefficients B, C, D le résultat des additionneurs 2614, 2612 et 2610. Un quatrième multiplieur 2626 multiplie par un coefficient A la donnée à la sortie du registre 2603. Un additionneur final effectue la somme de tous les résultats procurés par les multiplieurs 2620, 2622, 2624 et 2626 et fournit donc le résultat du filtrage. A titre indicatif les valeurs de ces coefficients sont : A = 0,661 ; B = 0,407 ; C = 0,008 ; D = - 0,076.

Ainsi que l'on s'en est rendu compte, on vient de décrire un filtre unidimensionnel. Bien évidemment on peut aussi utiliser, sans sortir du cadre de l'invention, un filtre bidimensionnel, c'est-à-dire faisant intervenir des points d'images de lignes précédentes et de lignes suivantes.

On peut expliquer maintenant plus en détail le fonctionnement de l'ensemble des organes 50, 70, 80. Pour cela on se reporte à la figure 9.

Ce fonctionnement est basé sur des cycles de traitement qui se produisent entre chaque apparition du signal HDD provoquant l'incrémentation du compteur 2025. On suppose donc qu'à l'instant t50 le contenu de ce compteur est "adk".

Premier cycle CYT1 : détection de mouvement ; pour cela, les signaux HMVN et HMVO sont activés aux instants t50 et t51. Si le mouvement est nul les autres cycles vont se dérouler, mais sans aucune influence à cause du commutateur 2055 qui est positionné sur 0 (fig. 7).

Cycles de traitement CYT2, CYT3 et CYT4 : le cycle CYT2 débute à l'instant t52 par l'apparition du signal HIT et par l'apparition des premiers paramètres $\phi_{Ti}$, $r_0$ à essayer, pour obtenir le meilleur filtrage de KALMAN. Dans cet exemple, trois paramètres vont être essayés, ce qui va constituer les cycles de traitement CYT2 et donc aussi CYT3 et CYT4. Dans chacun de ces cycles qui débutent par un signal HIT, on génère successivement les signaux HKOO, HKPO, HKLO et HKN qui surviennent aux instants t53, t54, t55 et t56 pour le cycle CYT2. Le signal HKQ est engendré avec le signal HIT à la fin du cycle CYT1, à l'instant t58 pour enregistrer systématiquement la première valeur IFD, les autres valeurs ne le seront que si elles sont meilleures.

Si le détecteur de mouvement 2000 a détecté un mouvement, à la fin du cycle CYT5 après l'impulsion HIT à l'instant t60 on est sûr que le registre 2075 contient la valeur de déplacement la mieux estimée par le filtrage de KALMAN et le registre 2500 contient la valeur IFD associée.

Cycle de traitement CYT5 : ce cycle débutant à l'instant t60 a pour but de comparer la valeur de l'erreur obtenue par l'organe de filtrage par blocs. Pour cela, on adresse la mémoire 1026 pour obtenir la valeur du déplacement. Comme le signal BC est actif pendant ce cycle la valeur DB se trouve appliquée d'une part au registre 2075 et d'autre part à l'additionneur 2015 ; il est à remarquer ici que la valeur DB est entière et que les valeurs dx et dy sont donc nulles. On calcule la grandeur IFD qui dans ce cas est :

$$IFDB = I(Z_i,t) - I[Z_i-DB(i),t-TR]$$

Ce calcul s'effectue comme dans les cycles précédents de sorte qu'à l'instant t61 on est sûr d'avoir le vecteur déplacement D(i) le mieux estimé, c'est-à-dire :

- soit le vecteur O
- soit un des vecteurs DK(i) obtenus par les différents $\phi_{Ti}$

- soit le vecteur DB(i).

Puis, à l'instant t62 survient l'impulsion HDD déclenchant le déroulement des cycles de traitement qui viennent d'être décrits.

## Revendications

1. Dispositif de traitement d'images pour l'estimation $D(Z_i)$ du déplacement d'objets situés dans celles-ci, dispositif constitué à partir d'un premier organe d'estimation (50) qui fournit pour chaque point "i" de coordonnées $Z_i$ d'image un vecteur de déplacement $DK(Z_i)$ à partir des informations de luminance contenues dans deux images successives $I(Z_i,t)$ et $I(Z_i,t-TR)$ séparées d'un temps TR, caractérisé en ce qu'il est prévu un deuxième organe d'estimation (60) pour fournir pour chaque point "i" un vecteur de déplacement $DB(Z_i)$ à partir desdites informations, un organe de mesure de qualité (70) pour apprécier les vecteurs $DK(Z_i)$ et $DB(Z_i)$ et pour agir sur un sélecteur de vecteurs $DK(Z_i)$ ou $DB(Z_i)$ (80) afin que le vecteur $D(Z_i)$ fourni par le dispositif soit celui deux vecteurs $DB(Z_i)$ et $DK(Z_i)$ donnant la meilleure qualité d'estimation et en ce qu'il est prévu un accès (90) sur le premier organe pour recevoir ce vecteur $D(Z_i)$ sélectionné.

2. Dispositif de traitement d'images pour l'estimation $D(Z_i)$ du déplacement d'objets situés dans celles-ci, selon la revendication 1, caractérisé en ce que le premier organe d'estimation est un organe d'estimation du type organe de filtrage de KALMAN.

3. Dispositif de traitement d'images pour l'estimation $D(Z_i)$ du déplacement d'objets situés dans celles-ci, selon la revendication 1 ou 2, caractérisé en ce que le deuxième organe d'estimation opère par corrélation de blocs d'éléments d'image.

4. Dispositif de traitement d'images pour l'estimation $D(Z_i)$ du déplacement d'objets situés dans celles-ci, selon les revendications 2 ou 3, dans le cas où cette dernière est dépendante de la revendication 2, caractérisé en ce que des moyens faisant partie de l'organe de filtrage de KALMAN fournissent la grandeur $DK(Z_i)$ à partir de paramètres prédéterminés et des moyens (2033) fournissent une grandeur dite d'innovation IFD telle que :
$$IFD(Z_i) = I(Z_i,t) - I(Z_i-DK(Z_i),t-TR)$$
le dispositif comportant un dispositif pour fournir plusieurs valeurs successives de ces paramètres et l'organe de mesure de qualité étant conçu aussi pour apprécier le minimum IFD en fonction de ces valeurs successives.

5. Dispositif de traitement d'images pour l'estimation $D(Z_i)$ du déplacement d'objets situés dans celles-ci, selon l'une des revendications 1 à 4, caractérisé en ce qu'il comporte un détecteur de mouvement (2000) pour fournir, s'il y a lieu, un vecteur $D(Z_i)$ de valeur indiquant qu'il n'y a pas de mouvement.

6. Dispositif de traitement d'images pour l'estimation $D(Z_i)$ du déplacement d'objets situés dans celles-ci selon la revendication 4 ou 5, caractérisé en ce qu'il comporte un dispositif pour fournir une grandeur $IFDB(Z_i) = I(Z_i,t) - I(Z_i-DB(Z_i),t-TR)$ et en ce que cette grandeur est utilisée comme critère de qualité par l'organe de mesure de qualité en prenant pour $D(Z_i)$ la valeur $DB(Z_i)$ ou $DK(Z_i)$ qui donne la valeur minimum $IFD(Z_i)$ ou $IFDB(Z_i)$.

7. Système de télévision caractérisé en ce qu'il comporte un dispositif de traitement d'images pour l'estimation $D(Z_i)$ du déplacement d'objets situés dans celles-ci, selon l'une des revendications 1 à 6.

## Claims

1. An image-processing device for estimating the displacement $D(Z_i)$ of objects situated in said image, comprising a first estimation member (50) providing for each point "i" having picture coordinates $Z_i$, a displacement vector $DK(Z_i)$ from luminance information contained in two successive images $I(Z_i,t)$ and $I(Z_i,t-TR)$ separated by a period TR, characterized in that the device comprises a second estimation member (60) for providing a displacement vector $DB(Z_i)$ for each point "i" based on said information, a quality measuring member (70) for evaluating the vectors $DK(Z_i)$ and $DB(Z_i)$ and for controlling a vector selector $DK(Z_i)$ or $DB(Z_i)$ to select that one of the two vectors $DB(Z_i)$ and $DK(Z_i)$ which provides the best estimation for the vector $D(Z_i)$ provided by the device and in that the first estimation member has an input (90) for receiving said selected vector $D(Z_i)$.

2. An image-processing device for estimating the displacement $D(Z_i)$ of objects situated in said image, as claimed in Claim 1, characterized in that the first estimation member is an estimation member of the KALMAN filtering member type.

3. An image-processing device for estimating the displacment $D(Z_i)$ of objects situated in said image, as claimed in Claim 1 or 2, characterized in that the second estimation member operates by means of picture element block correlation.

4. An image-processing device for estimating the displacement $D(Z_i)$ of objects situated in said image as claimed in Claim 2 or 3 in so far as the latter is appendent to Claim 2, characterized in that means forming part of the Kalman filtering member provide the value $DK(Z_i)$ from predetermined parameters and means (2033) providing a value referred to as innovation IFD so that
$$IFD(Z_i) = I(Z_i,t) - I(Z_i-DK(Z_i),t-TR)$$
the device comprising a device for providing a plurality of successive values of said parameters and the quality measuring member being also adapted to evaluate the minimum value of IFD as a function of said successive values.

5. An image-processing device for estimating the displacement $D(Z_i)$ of objects situated in said image as claimed in any one of Claims 1 to 4, characterized in that it comprises a motion detector (2000) for providing, if necessary, a vector $D(Z_i)$ having a value indicating that there is no motion.

6. An image-processing device for estimating the displacement $D(Z_i)$ of objects situated in said image as claimed in Claim 4 or 5, characterized in that it comprises a device for providing a value $IFDB(Z_i) = I-(Z_i,t) - I(Z_i-DB(Z_i), t-TR)$ and in that this value is utilized as a quality criterion by the quality measuring member, wherein for $D(Z_i)$ is taken that value $DB(Z_i)$ or $DK(Z_i)$ which gives the smallest value of $IFD(Z_i)$ or $IFDB(Z_i)$.

7. A television system, characterized in that it includes an image-processing device for estimating the displacement $D(Z_i)$ of objects in said image, as claimed in any one of Claims 1 to 6.

**Ansprüche**

1. Bildverarbeitungsanordnung zum Schätzen der Verschiebung $D(Z_i)$ von Gegenständen in diesen Bildern mit einem ersten Schätzungselement (50), das für jeden Punkt "i" mit den Bildkoordinaten $Z_i$ einen Verschiebungsvektor $D(Z_i)$ liefert, ausgehend von den Leuchtdichteinformationen in zwei aufeinanderfolgenden Bildern $I(Z_i,t)$ und $I(Z_i,t-TR)$, die durch eine Zeitperiode TR voneinander getrennt sind, **dadurch gekennzeichnet** , daß ein zweites Schätzungselement (60) vorgesehen ist um für jeden Punkt "i" einen Verschiebungsvektor $DB(Z_i)$ zu liefern, ausgehend von den genannten Informationen, sowie ein Qualitätsmeßelement (70) zum Bewerten der Vektoren $DK(Z_i)$ und $DB(Z_i)$ und zum Steuern eines Vektorwählers (80) für die Vektoren $DK(Z_i)$ uns $DB(Z_i)$, damit der von der Anordnung gelieferte Vektor $D(Z_i)$ derjenige der beiden Vektoren $DB(Z_i)$ und $DK(Z_i)$ ist, der die beste Schätzung ergibt, und daß das erste Element mit einem Zugriff (90) versehen ist zum Erhalten des gewählten Vektors $D(Z_i)$.

2. Bildverarbeitungsanordnung zum Schätzen der Verschiebung $D(Z_i)$ von Gegenständen in den Bildern nach Anspruch 1, **dadurch gekennzeichnet,** daß das erste Schätzungselement ein Schätzungselement vom KALMAN-Filterelement-Typ ist.

3. Bildverarbeitungsanordnung zum Schätzen der Verschiebung $D(Z_i)$ von Gegenständen in den Bildern nach Anspruch 1 oder 2, **dadurch gekennzeichnet,** daß das zweite Schätzungselement durch Korrelation von Bildelementblöcken arbeitet.

4. Bildverarbeitungsanordnung zum Schätzen der Verschiebung $D(Z_i)$ von Gegenständen in den Bildern nach Anspruch 2 oder 3, falls diese letztere von Anspruch 2 abhängig ist, **dadurch gekennzeichnet,** daß Mittel, die einen Teil des KALMAN-Filterelementes bilden, den Wert $\overline{DK(Z_i)}$ aus vorbestimmten Parametern liefern und daß Mittel (2033) einen als Innovations-IFD bezeichneten Wert liefern, so daß gilt:

$$IFD(Z_i) = I(Z_i,t) - I(Z_i-DK(Z_i),t-TR)$$

wobei die Anordnung weiterhin eine Schaltungsanordnung aufweist zum Liefern mehrerer aufeinanderfolgender Werte der Parameter und daß das Qualitätsmeßelement ebenfalls dazu vorgesehen ist, abhängig von diesen aufeinanderfolgenden Werten den minimalen Wert von IFD zu bewerten.

5. Bildverarbeitungsanordnung zum Schätzen der Verschiebung $D(Z_i)$ von Gegenständen in den Bildern nach einem der Ansprüche 1 bis 4, **dadurch gekennzeichnet,** daß sie einen Bewegungsdetektor (2000) aufweist zum Liefern eines etwaigen Vektors $\overline{D(Z_i)}$, dessen Wert angibt, daß es keine Bewegung gibt.

6. Bildverarbeitungsanordnung zum Schätzen der Verschiebung $D(Z_i)$ von Gegenständen in den Bildern nach Anspruch 4 oder 5, **dadurch gekennzeichnet,** daß sie eine Schaltungsanordnung aufweist zum Liefern eines Wertes

$$IFDB(Z_i) = I(Z_i,t) - I(Z_i-DB(Z_i),t-TR)$$

und daß dieser Wert von dem Qualitätsmeßelement als Qualitätskriterium angewandt wird, wobei für $D(Z_i)$ der Wert $DB(Z_i)$ oder $DK(Z_i)$ genommen wird, der den minimalen Wert $IFD(Z_i)$ oder $IFDB(Z_i)$ gibt.

7. Fernsehsystem, **dadurch gekennzeichnet,** daß es eine Bildverarbeitungsanordnung aufweist zum Schätzen der Verschiebung $\overline{D(Z_i)}$ von Gegenständen in den Bildern nach einem der Ansprüche 1 bis 6.

FIG.1

# FIG. 2

PEL1  PEL2  PEL7                    PEL672  PEL678

| LG1 | | | | | | | | |
| LG2 | | | | | | | | |
| | | | | | | | | |
| LG7 | | | | | | | | |
| LG8 | | | | | | | | |

PEL8

| BL1 | BL2 | BL3 | BL81 | BL82 | BL83 |
| BL84 | BL85 | BL86 | B 64 | BL165 | BL166 |
| BL 5313 | BL5314 | BL5315 | BL53 4 | BL5395 | BL5396 |
| BL5396 | BL5397 | BL5398 | BL5 76 | BL5477 | BL5478 |

LG 527

LG 534

PEL 362052

# FIG. 4

PELb1  PELb2                PELb8

$BL_b$

LGb1
LGb2

LGb8

EP 0 241 983 B1

# FIG. 3

EP 0 241 983 B1

FIG. 5

EP 0 241 983 B1

# FIG.6

EP 0 241 983 B1

FIG.7

EP 0 241 983 B1

19

# FIG.8

2092

HMWN

2094

2095

2093

HMWO

2096

L

2097

S
R

HDD

2000

# FIG.11

2500

2505

IFD

HBST

2502

HKQ

2503

HIT

2080

# FIG.12

a1    b1    c1    d1

2551

2552

$\varphi_{TI}$

2553

2554

2556

2557

$r_0$

a    b    c    d

2090

# FIG. 9

EP 0 241 983 B1

FIG. 10

EP 0 241 983 B1

# FIG. 13

2001, 2002, 2003, 2004